# EUROPEAN PATENT APPLICATION

(11) **EP 2 453 552 A2**
(43) Date of publication of application: **16.05.2012**
(21) Application number: 11162351.8
(22) Date of filing: 14.04.2011
(51) Int. Cl.: H02K 3/20, H02K 3/26, H02K 21/24, H02K 1/14

(54) **Motor stator and assembling method thereof**

(30) Priority: 12.11.2010 TW 099138991
(71) Applicant: Yen Sun Technology Corp., Renwu Township Kao hsiung 814 (TW)
(72) Inventor: Chen, Chien-Jung, 814, Taiwan (TW); Liu, Hsien-Wen, 807, Taiwan (TW); Hsu, Chih-Tsung, 814, Taiwan (TW); Tsai, Tzu-Wen, 811, Taiwan (TW); Shih, Cheng-Tien, 909, Taiwan (TW); Wu, Hsin-Hsien, 815, Taiwan (TW); Lee, Jia-Ching, 807, Taiwan (TW)
(74) Representative: Zinkler, Franz

(57) **Abstract**

A fan motor stator (3) includes a stator unit (31) and an auxiliary induction unit (32). The stator unit (31) includes a circuit substrate (311), and a plurality of induction coils (312) embedded in the circuit substrate (311). The auxiliary induction unit (32) includes an insulating member (321), a magnetic conductor (322), and at least one coil winding assembly (323). The coil winding assembly (323) includes a conductive rod (324) and an auxiliary coil (327). The rod (324) has an insert rod section (325) extending through the magnetic conductor (322), the insulating member (321), and the circuit substrate (311), and a wound rod section (326) permitting the auxiliary coil (327) to be wound thereon, such that the auxiliary coil (327) is disposed outwardly of the magnetic conductor (322). During assembly, the induction coil assembly is mounted to the magnetic conductor (322), and the insulating member (321) is superposed on the circuit substrate (311). Subsequently, the rod (324) is inserted through the insulating member (321) and into the circuit substrate (311).

## Description

This invention relates to a driving device and an assembling method thereof, and more particularly to a motor stator and an assembling method thereof.

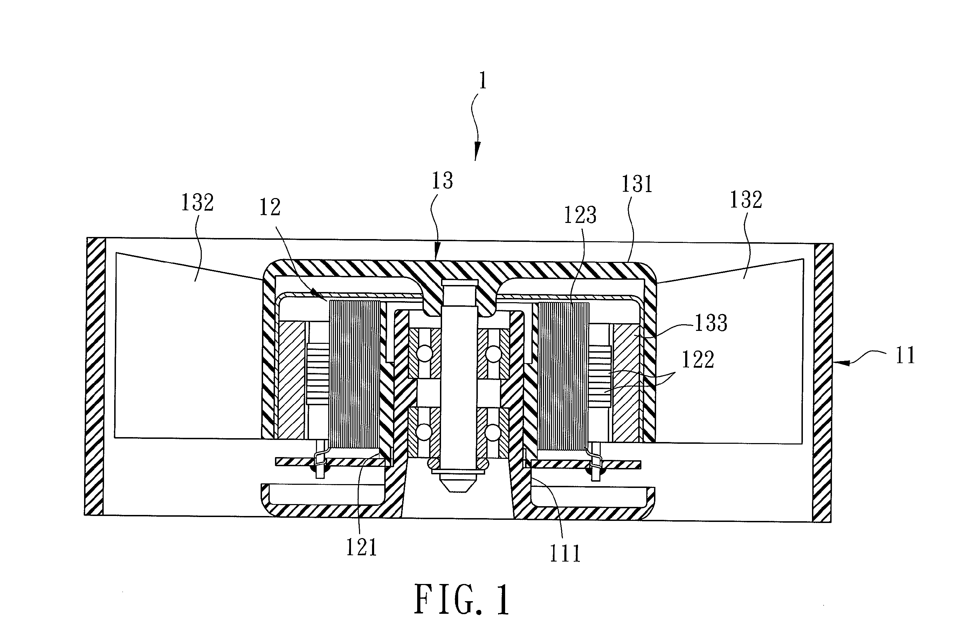

Referring to Fig. 1, a conventional heat-dissipating fan 1 includes an outer housing 11, a stator 12 disposed on the outer housing 11, and a rotor 13 disposed pivotally on the outer housing 11.

The outer housing 11 includes a tubular shaft 111. The stator 12 includes a stator frame 121 sleeved fixedly on the shaft 111, a plurality of superposed silicone steel sheets 122 fixed on the stator frame 121, and a plurality of induction coils 123 wound around the stator frame 121.

The rotor 13 includes a hub 131 disposed rotatably on the shaft 111 for covering the stator 12, a plurality of blades 132 extending outwardly from an outer peripheral surface of the hub 131, and a ring-shaped magnet 133 disposed fixedly on an inner peripheral surface of the hub 131 and spaced apart from and disposed around the stator 12.

When the induction coils 123 are energized, a repulsive magnetic force is created between the ring-shaped magnet 133 and the silicone steel sheets 122 to drive rotation of the ring-shaped magnet 133 and, thus, the rotor 13 relative to the stator 12.

Since both the silicone steel sheets 122 and the induction coils 123 are disposed on the stator frame 121, the stator 12 of the heat-dissipating fan 1 is relatively high (i.e., thick), thereby limiting the applicable range of the fan 1.

A thin motor stator has been proposed to solve the applicable range problem of the aforesaid conventional heat-dissipating fan 1. For example, referring to Fig. 2, in a thin fan disclosed in Taiwanese Patent Publication No. 1332058, a bearing 21, a hub 22, an iron-contained metallic sheet 23, and a magnet 24 are integrated to constitute a rotating member 20. The rotating member 20 is driven by a coil circuit board 25 embedded with a plurality of coil windings 251. As such, the height of the fan is reduced to increase the applicable range of the fan.

As well known in the art that, the more the turn numbers of the coil windings 251, the more the intensity of the magnetic field generated after the coil windings 251 are energized. However, since the area of the coil circuit board 25 is relative small, the turn numbers of the coil windings 251 are limited so that, when the coil windings 251 are energized, the intensity of the magnetic field thus generated is small. As a consequence, the rotational speed of the hub 22 is also small, thereby resulting in difficulties when driving rotation of the hub 22.

One object of this invention is to provide a thin motor stator that includes coils, the total turn number of which can be increased effectively.

Another object of this invention is to provide an assembling method of a thin motor stator including coils, the turn numbers of which can be increased effectively.

According to an aspect of this invention, there is provided a motor stator comprising:
a stator unit including a circuit substrate, and a plurality of spaced-apart induction coils embedded within the circuit substrate; and
an auxiliary induction unit including an insulating member disposed on the circuit substrate, a magnetic conductor disposed on the insulating member and spaced apart from the circuit substrate, and at least one coil winding assembly extending through the magnetic conductor, the insulating member, and the circuit substrate, the coil winding assembly including a conductive rod extending through the magnetic conductor, the insulating member, and the circuit substrate, and an auxiliary coil wound around the rod, the rod having an insert rod section extending through the magnetic conductor, the insulating member, and the circuit substrate, and a wound rod section opposite to the insert rod section and permitting the auxiliary coil to be wound thereon, such that the auxiliary coil is disposed outwardly of the magnetic conductor.

According to another aspect of this invention, there is provided an assembling method of a motor stator, the motor stator including a stator unit and an auxiliary induction unit, the stator unit including a circuit substrate and a plurality of induction coils embedded within the circuit substrate, the auxiliary induction unit including an insulating member, a magnetic conductor, and at least one coil winding assembly, the coil winding assembly including a conductive rod and an auxiliary coil, the assembling method comprising the steps of:
(a) inserting the rod through the magnetic conductor, and subsequently winding the auxiliary coil around the rod, such that the auxiliary coil is disposed outwardly of the magnetic conductor and such that a portion of the rod extends outwardly from the magnetic conductor;
(b) securing the induction coils within the circuit substrate, and subsequently superposing the insulating member on the circuit substrate to conceal the induction coils between the circuit substrate and the insulating member; and
(c) moving the portion of the rod through the insulating member and into the circuit substrate.

As such, since the auxiliary coil is exposed outwardly of the circuit substrate, the turn number of the auxiliary coil (or magnetic pole slot number) is not limited by the area of the circuit substrate, and can be increased significantly to improve a driving force of the motor stator to thereby promote the performance of a motor incorporating the motor stator.

These and other features and advantages of this invention will become apparent in the following detailed description of the preferred embodiments of this invention, with reference to the accompanying drawings, in which:
Fig. 1 is a sectional view of one conventional motor stator;

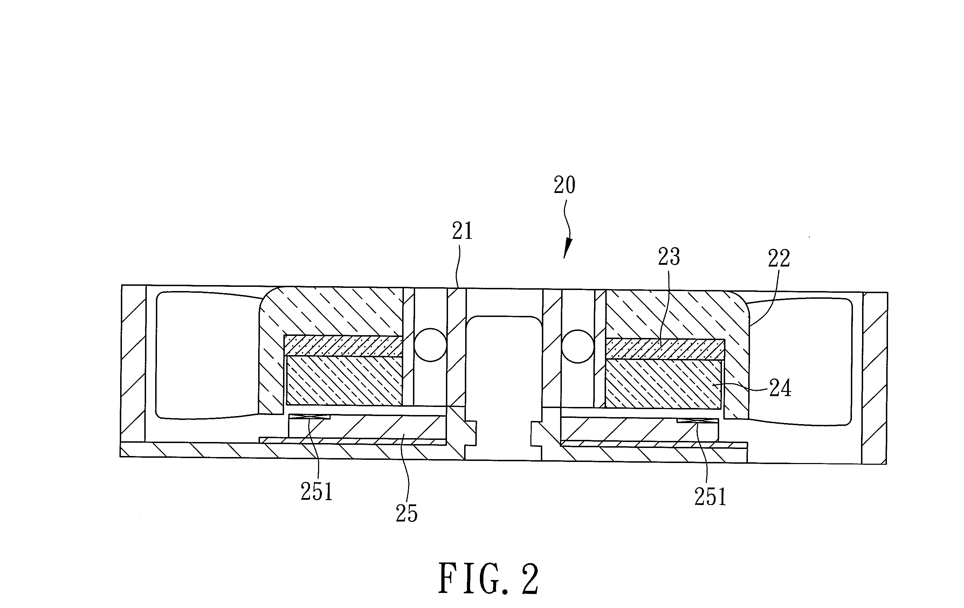

Fig. 2 is a sectional view of another conventional motor stator disclosed in Taiwanese Patent Publication No. 1332058;
Fig. 3 is an exploded perspective view of the first preferred embodiment of a motor stator according to this invention;
Fig. 4 is a top view of the first preferred embodiment;
Fig. 5 is a sectional view of a heat-dissipating fan incorporating the first preferred embodiment;
Fig. 6 is a top view of the second preferred embodiment of a motor stator according to this invention;
Fig. 7 is a sectional view of a heat-dissipating fan incorporating the second preferred embodiment;
Fig. 8 is an exploded perspective view of the third preferred embodiment of a motor stator according to this invention;
Fig. 9 is a sectional view of a heat-dissipating fan incorporating the third preferred embodiment;
Fig. 10 is an exploded perspective view of the fourth preferred embodiment of a motor stator according to this invention; and
Figs. 11A, 11B, 11C, and 11D illustrate an assembling method of a motor stator according to this invention.

Before the present invention is described in greater detail in connection with the preferred embodiments, it should be noted that similar elements and structures are designated by like reference numerals throughout the entire disclosure.

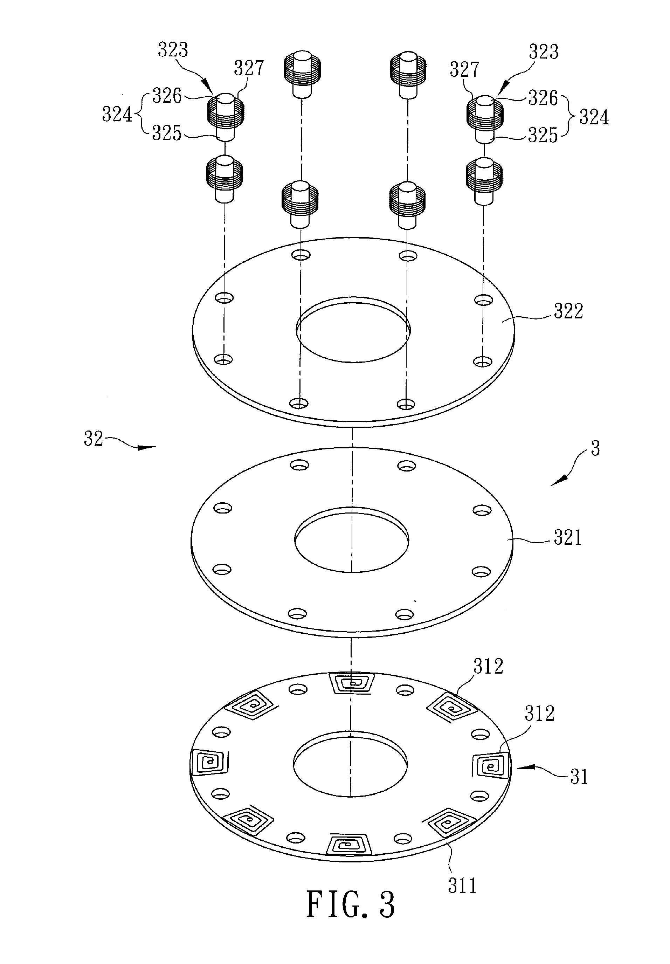

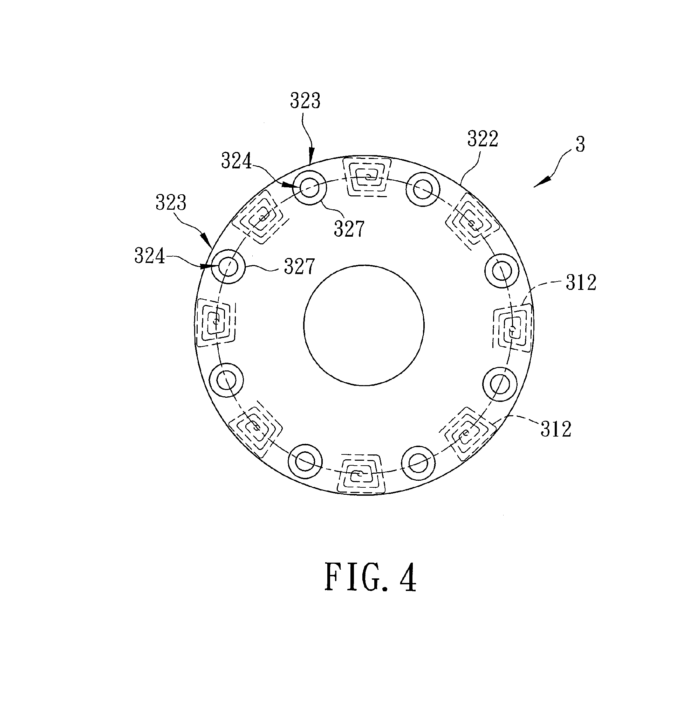

Referring to Figs. 3 and 4, the first preferred embodiment of a motor stator 3 according to this invention includes a stator unit 31 and an auxiliary induction unit 32 disposed on the stator unit 31. The stator unit 31 includes a circuit substrate 311, and a plurality of spaced-apart induction coils 312 embedded within the circuit substrate 311.

In this embodiment, the stator unit 31 includes eight angularly equidistant induction coils 312 configured as enameled wires. The number of the induction coils 312 may be changed.

The auxiliary induction unit 32 includes an insulating member 321 disposed on the circuit substrate 311, a magnetic conductor 322 disposed on the insulating member 321, and a plurality of coil winding assemblies 323 extending through the magnetic conductor 322, the insulating member 321, and the circuit substrate 311. The insulating member 321 can prevent a short-circuit fault occurring due to contact between the magnetic conductor 322 and the induction coils 312.

In this embodiment, the auxiliary induction unit 32 includes eight angularly equidistant coil winding assemblies 323 that are arranged alternately with the induction coils 312 and that are electrically connected to the induction coils 312 by conductive lines (not shown) extending along a circle shown by the phantom line. The magnetic conductor 322 is configured as a silicone steel plate.

Each of the coil winding assemblies 323 includes a conductive rod 324 extending through the magnetic conductor 322, the insulating member 321, and the circuit substrate 311, and an auxiliary coil 327 wound around the rod 324. Each of the rods 324 of the coil winding assemblies 323 has an insert rod section 325 extending through the magnetic conductor 322, the insulating member 321, and the circuit substrate 311, and a wound rod section 326 opposite to the insert rod section 325 and permitting the corresponding auxiliary coil 327 to be wounded thereon. In this embodiment, the auxiliary coils 327 of the coil winding assemblies 323 are configured as enameled wires.

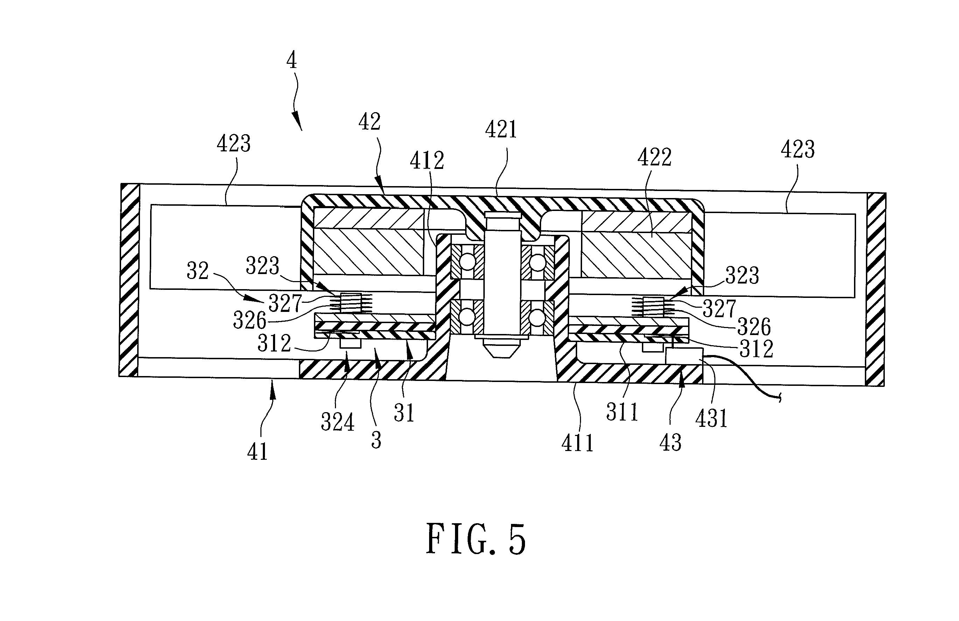

With further reference to Fig. 5, the motor stator 3 can be used on a heat-dissipating fan 4. The fan 4 includes a base 41, a rotor unit 42, and a power supply unit 43.

The base 41 includes a main body 411, and a tubular shaft 412 disposed pivotally on a central portion of the main body 411. The rotor unit 42 includes a hub 421 disposed rotatably on the shaft 412, a ring-shaped magnet 422 disposed fixedly and coaxially within the hub 421, and a plurality of spaced-apart blades 423 extending outwardly from an outer peripheral surface of the hub 421.

The circuit substrate 311 is disposed fixedly on the shaft 412. The induction coils 312 and the coil winding assemblies 323 are located under the ring-shaped magnet 422. The power supply unit 43 includes a driving power source 431 electrically connected to the induction coils 312 and the auxiliary coils 327 of the coil winding assemblies 323. In this embodiment, the driving power source 431 is electrically connected to one of the induction coils 312 by a wire, as shown in Fig. 5.

When the driving power source 431 is turned on, the induction coils 312 and the auxiliary coils 327 are energized, so as to generate a repulsive magnetic force for rotating the ring-shaped magnet 422 relative to the motor stator 3. Consequently, the hub 421 and the blades 423 co-rotate with the ring-shaped magnet 422.

Since the auxiliary coils 327 are wound respectively around the wound rod sections 326 of the rods 324, and are disposed outwardly of the circuit substrate 311, the turn numbers of the auxiliary coils 327 are not limited by the area and the thickness of the circuit substrate 311, and can be increased according to the user's needs. In this manner, the magnetic field intensity is increased so that the rotor unit 42 can be driven easily to rotate. Consequently, the auxiliary coils 327 can cooperate with the induction coils 312 to increase magnetic pole slot number, and thus both the rotational speed of the hub 421 and the heat dissipation effect of the blades 423.

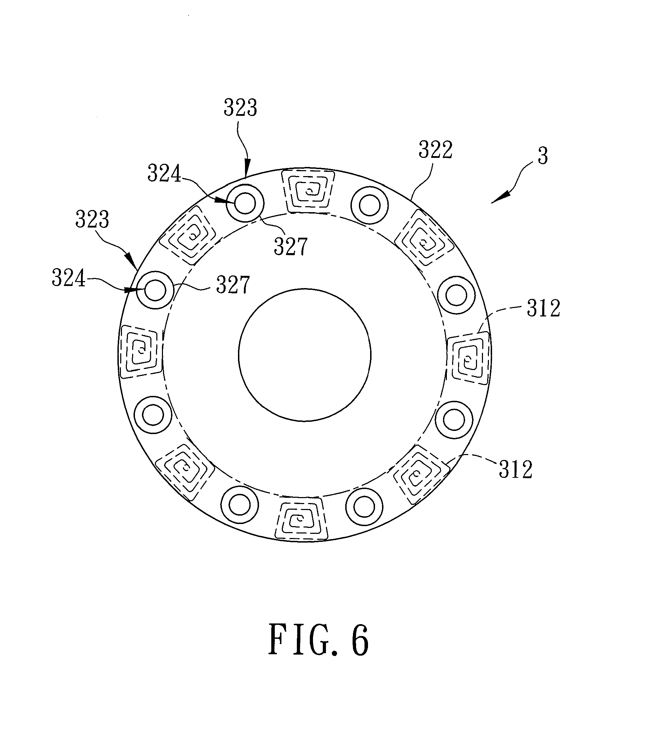

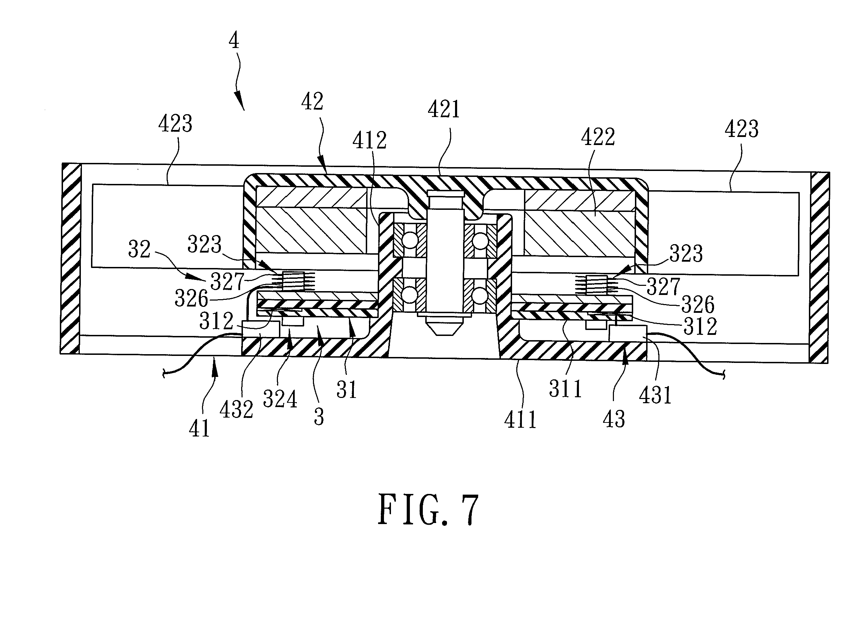

Figs. 6 and 7 show the second preferred embodiment of a motor stator according to this invention, which is similar in construction to the first preferred embodiment, except that the auxiliary coils 327 are electrically insulated from the induction coils 312. The power supply unit 43 further includes a starting power source 432 that are electrically connected to the auxiliary coils 327. The driving power source 431 is electrically connected to only the induction coils 312.

When turned on, the starting power source 432 supplies an electric power to the auxiliary coils 327. Since the auxiliary coils 327 are wound respectively around the rods 324, and are exposed outwardly of the circuit substrate 311, the turn numbers of the auxiliary coils 327 can be increased, so that the intensity of the magnetic field generated as a result of generization of the auxiliary coils 327 is increased. Hence, the rotor unit 42 can be driven easily to rotate. As soon as the rotor unit 42 is rotated, the starting power source 432 is turned off, and the driving power source 431 is turned on so that the induction coils 312 are energized to maintain continued smooth rotation of the rotor unit 42.

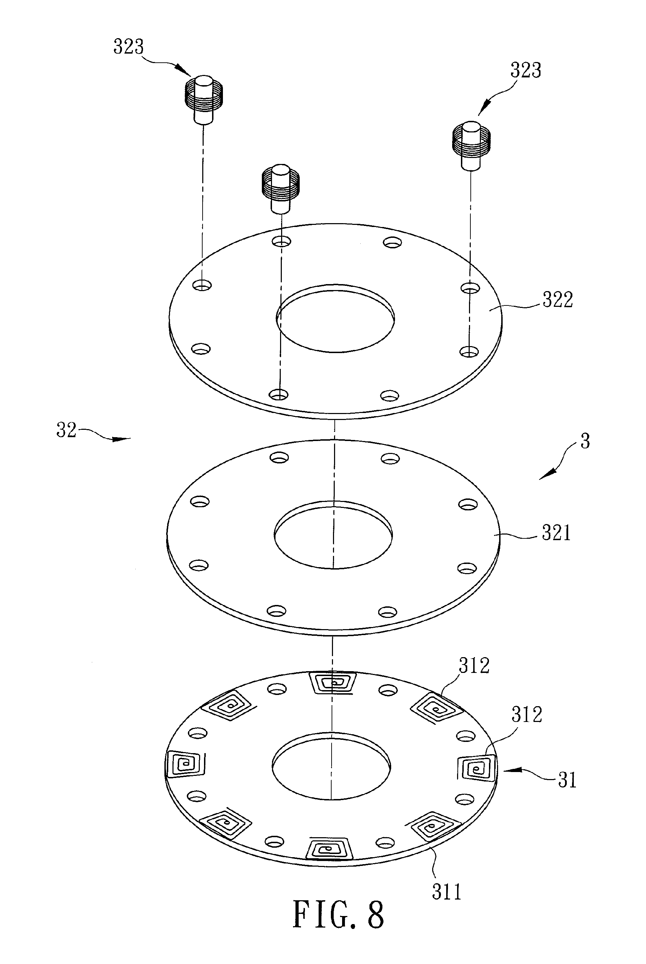

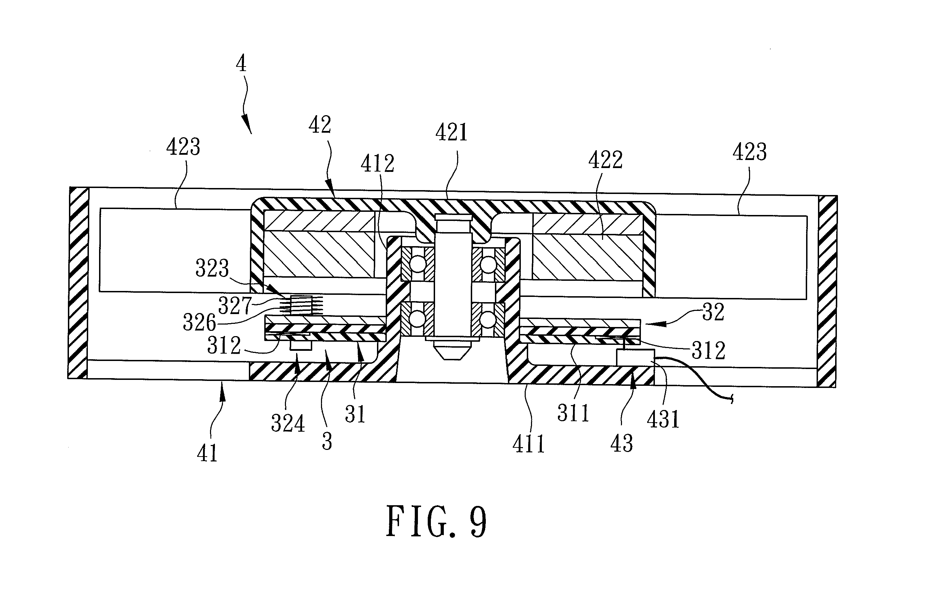

Figs. 8 and 9 show the third preferred embodiment of a motor stator according to this invention, which is different from the second preferred embodiment in that the number of the coil winding assemblies 323 of the auxiliary induction unit 32 is different from that of the induction coils 312.

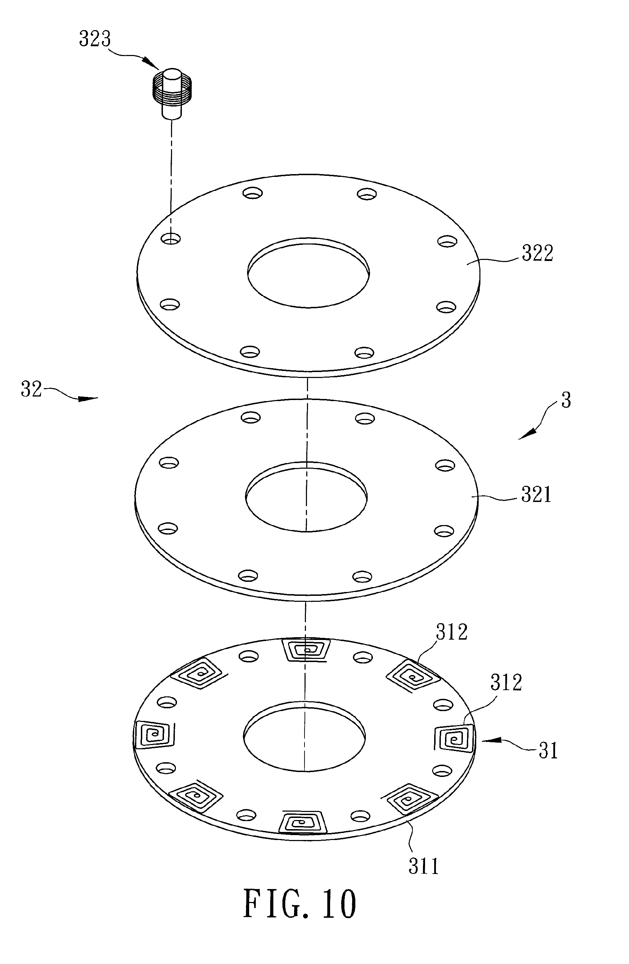

It should be noted that, although the auxiliary induction unit 32 has only one coil winding assembly 323, as shown in Fig. 10, the same object and effect can be achieved as long as the turn number of the auxiliary coil 327 is large sufficient to drive the rotor unit 42 to rotate.

An assembling method of the first preferred embodiment includes first, second, and third steps.

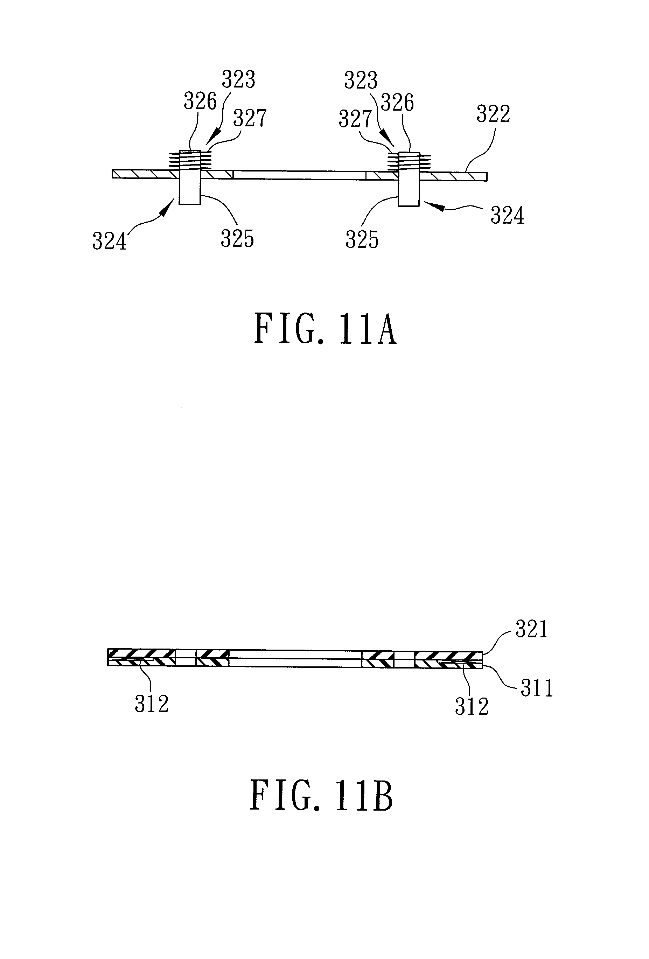

In the first step, as shown in Fig. 11A, the rods 324 are first inserted through the magnetic conductor 322. Next, the auxiliary coils 327 are wound respectively on the wound rod sections 326 of the rods 324, such that they are disposed outwardly of the magnetic conductor 322, and portions of the insert rod sections 325 of the rods 324 extend outwardly from the magnetic conductor 322. As such, a semi-product is formed from the coil winding assemblies 323 and the magnetic conductor 322.

In the second step, as shown in Fig. 11B, the induction coils 312 are first secured within the circuit substrate 311. Next, the insulating member 321 is superposed on the circuit substrate 311 to conceal the induction coils 312 between the circuit substrate 311 and the insulating member 321.

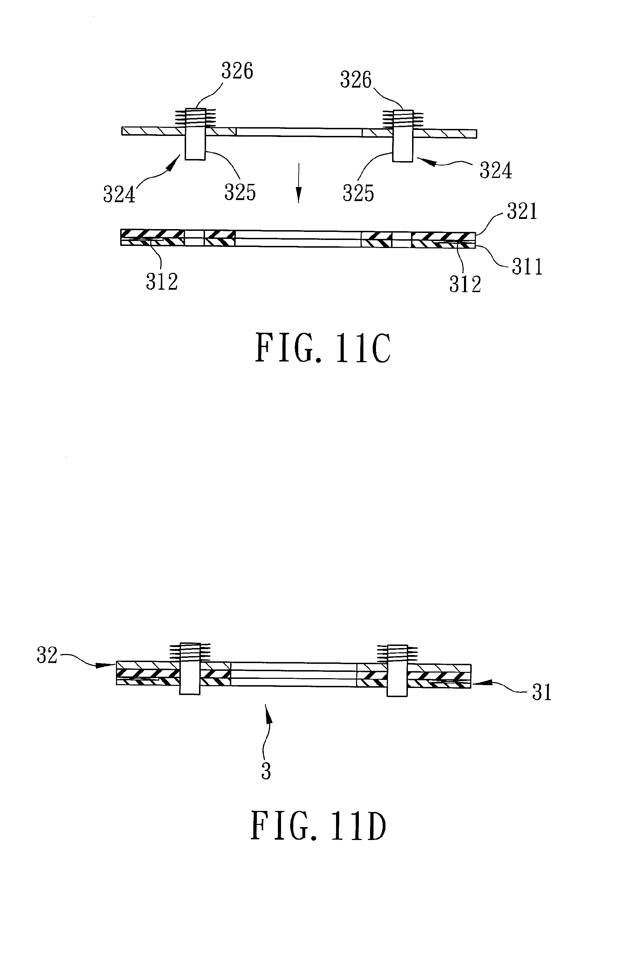

In the third step, as shown in Fig. 11C, the portions of the insert rod sections 325 are moved through the insulating member 321 and the circuit substrate 311 to form the motor stator 3 shown in Fig. 11D.

## Claims

1. A motor stator (3) **characterized by**:
a stator unit (31) including a circuit substrate (311), and a plurality of spaced-apart induction coils (312) embedded within said circuit substrate (311) ; and
an auxiliary induction unit (32) including an insulating member (321) disposed on said circuit substrate (311), a magnetic conductor (322) disposed on said insulating member (321) and spaced apart from said circuit substrate (311), and at least one coil winding assembly (323) extending through said magnetic conductor (322), said insulating member (321), and said circuit substrate (311), said coil winding assembly (323) including a conductive rod (324) extending through said magnetic conductor (322), said insulating member (321), and said circuit substrate (311), and an auxiliary coil (327) wound around said rod (324), said rod (324) having an insert rod section (325) extending through said magnetic conductor (322), said insulating member (321), and said circuit substrate (311), and a wound rod section (326) opposite to said insert rod section (325) and permitting said auxiliary coil (327) to be wound thereon, such that said auxiliary coil (327) is disposed outwardly of said magnetic conductor (322).

2. The motor stator (3) as claimed in Claim 1, **characterized in that** said induction coils (312) of said stator unit (31) are electrically insulated from said auxiliary coil (327) of said coil winding assembly (323).

3. The motor stator (3) as claimed in Claim 1, **characterized in that** said auxiliary induction unit (32) includes a plurality of said coil winding assemblies (323) extending through said magnetic conductor (322), said insulating member (321), and said circuit substrate (311).

4. The motor stator (3) as claimed in Claim 3, further **characterized in that** the number of said coil winding assemblies (323) is the same as that of said induction coils (312).

5. The motor stator (3) as claimed in Claim 4, further **characterized in that** said auxiliary coils (327) of said coil winding assemblies (323) are electrically insulated from said induction coils (312).

6. The motor stator (3) as claimed in Claim 4, further **characterized in that** said auxiliary coils (327) of said coil winding assemblies (323) are electrically connected to said induction coils (312).

7. The motor stator (3) as claimed in Claim 3, further **characterized in that** the number of said auxiliary coils (327) of said coil winding assemblies (323) is different from that of said induction coils (312), and said auxiliary coils (327) of said coil winding assemblies (323) are electrically insulated from said induction coils (312).

8. An assembling method of a motor stator (3), the motor stator (3) including a stator unit (31) and an auxiliary induction unit (32), the stator unit (31) including a circuit substrate (311) and a plurality of induction coils (312) embedded within the circuit substrate (311), the auxiliary induction unit (32) including an insulating member (321), a magnetic conductor (322), and at least one coil winding assembly (323), the coil winding assembly (323) including a conductive rod (324) and an auxiliary coil (327), said assembling method comprising the steps of:
(a) inserting the rod (324) through the magnetic conductor (322), and subsequently winding the auxiliary coil (327) around the rod (324), such that the auxiliary coil (327) is disposed outwardly of the magnetic conductor (322) and a portion of the rod (324) extends outwardly from the magnetic conductor (322);
(b) securing the induction coils (312) within the circuit substrate (311), and subsequently superposing the insulating member (321) on the circuit substrate (311) to conceal the induction coils (312) between the circuit substrate (311) and the insulating member (321); and
(c) moving the portion of the rod (324) through the insulating member (321) and into the circuit substrate (311).
